# EUROPEAN PATENT APPLICATION

(11) **EP 3 926 514 A1**
(43) Date of publication of application: **22.12.2021**
(21) Application number: 21163220.3
(22) Date of filing: 17.03.2021
(51) Int. Cl.: G06F 40/30

(54) **LANGUAGE MODEL TRAINING METHOD, APPARATUS, ELECTRONIC DEVICE AND READABLE STORAGE MEDIUM**

(30) Priority: 19.06.2020 CN 202010564636
(71) Applicant: Beijing Baidu Netcom Science and Technology Co., Ltd., Beijing 100085 (CN)
(72) Inventor: ZHU, Danxiang, Beijing, Beijing 100085 (CN)
(74) Representative: dompatent von Kreisler Selting Werner - Partnerschaft von Patent- und Rechtsanwälten mbB

(57) **Abstract**

The present disclosure provides a method for training language model, and associated apparatus, electronic device, readable storage medium, and computer program product, which relates to the technical field of deep learning and the technical field of natural language processing. A specific implementation solution is as follows: sampling a paragraph of text from each article in a plurality of articles respectively, to obtain multiple paragraphs of text; concatenating the multiple paragraphs of text to obtain a concatenated text; inputting the concatenated text into a language model, a prediction value of the number of articles being output via the language model; training the language model based on the actual number of articles in the plurality of articles and a prediction value of the number of articles, until a preset training completion condition is satisfied. In the present disclosure, the classification of the entire paragraph of text content by the language model may be implemented and the effect of recognizing the text content by the language model may be enhanced by training the language model using texts sampled from the plurality of articles.

## Description

### Field of the Disclosure

The present disclosure relates to the technical field of computers, specifically to the technical field of deep learning and the technical field of natural language processing, and particularly to a method for training language model, and associated apparatus, electronic device, readable storage medium, and computer program product.

### Background of the Disclosure

In the field of Chinese language Natural Language Processing (NLP), a lot of unsupervised texts are used to perform self-supervised pre-training learning of the language model, and then supervised task data are used to perform parameter fine-tuning for the language model. This is an advanced language model training technology in the current field of NLP.

In the training learning of the language model in the prior art, the training of the language model in respect of single-sentence classification tasks is lacked so that the language model lacks a single-sentence classification capability, thereby limiting the recognition effect of the language model for the text content.

### Summary of the Disclosure

A plurality of aspects of the present disclosure provide a method for training language model, and associated apparatus, electronic device, readable storage medium, and computer program product to implement the classification of the entire paragraph of text content by the language model and enhance the effect of recognizing the text content by the language model.

According to a first aspect, there is provided a method for training language model, comprising:
sampling a paragraph of text from each article in a plurality of articles respectively, to obtain multiple paragraphs of text;
concatenating the multiple paragraphs of text to obtain a concatenated text;
inputting the concatenated text into a language model, a prediction value of the number of articles being output via the language model;
training the language model based on the actual number of articles in the plurality of articles and a prediction value of the number of articles, until a preset training completion condition is satisfied.

According to a second aspect, there is provided an apparatus for training language model, comprising:
a sampling unit configured to sample a paragraph of text from each article in a plurality of articles respectively, to obtain multiple paragraphs of text;
a concatenating unit configured to concatenate the multiple paragraphs of text to obtain a concatenated text;
a language model configured to receive input concatenated text and output a prediction value of the number of articles;
a training unit configured to train the language model based on the actual number of articles in the plurality of articles and a prediction value of the number of articles, until a preset training completion condition is satisfied.

According to a third aspect, there is provided an electronic device, comprising:
at least one processor; and
a memory communicatively connected with the at least one processor; wherein,
the memory stores instructions executable by the at least one processor, and the instructions are executed by the at least one processor to cause the at least one processor to implement the method in any of the above aspects and any possible implementation.

According to a fourth aspect of the present disclosure, there is provided a non-transitory computer-readable storage medium storing computer instructions therein, wherein the computer instructions are used to cause the computer to implement the method in any of the above aspects and any possible implementation.

According to a fifth aspect of the present disclosure, there is provided a computer program product comprising instructions which, when the program is executed by a computer, cause the computer to implement the method in any of the above aspects and any possible implementation.

As known from the above technical solutions, in embodiments of the present disclosure, a paragraph of text is sampled from each article in a plurality of articles respectively, to obtain multiple paragraphs of text; the multiple paragraphs of text are concatenated to obtain the concatenated text; then the concatenated text is input into the language model and the prediction value of the number of articles is output via the language model; the language model is trained based on the actual number of articles in the plurality of articles and the prediction value of the number of articles, until a preset training completion condition is satisfied. In the above manner, a duly trained language model may be obtained so that the duly trained language model has a capability of recognizing and classifying the content of the whole paragraph of text, thereby enhancing the effect of recognizing the text content by the language model.

In addition, according to the technical solution provided by the present disclosure, when the duly trained language model is used for a subsequent NLP task, the accuracy of the processing result of the NLP task may be effectively improved.

It is to be understood that the summary section is not intended to identify key or essential features of embodiments of the present disclosure, nor is it intended to be used to limit the scope of the present disclosure. Other features of the present disclosure will become easily comprehensible through the following description.

### Brief Description of Drawings

To describe technical solutions of embodiments of the present disclosure more clearly, figures to be used in the embodiments or in depictions regarding the prior art will be described briefly. Obviously, the figures described below are some embodiments of the present disclosure. Those having ordinary skill in the art appreciate that other figures may be obtained from these figures without making inventive efforts. The figures are only intended to facilitate understanding the solutions, not to limit the present disclosure. In the figures,
FIG. 1 illustrates a schematic diagram of a first embodiment of the present disclosure;
FIG. 2 illustrates a schematic diagram of a second embodiment of the present disclosure;
FIG. 3 illustrates a schematic diagram of a third embodiment of the present disclosure;
FIG. 4 illustrates a schematic diagram of a fourth embodiment of the present disclosure;
FIG. 5 illustrates a schematic diagram of a fifth embodiment of the present disclosure;
FIG. 6 illustrates a block diagram of an electronic device for implementing a method for training language model according to embodiments of the present disclosure.

### Detailed Description of Preferred Embodiments

Exemplary embodiments of the present disclosure are described below with reference to the accompanying drawings, include various details of the embodiments of the present disclosure to facilitate understanding, and should be considered as being only exemplary. Therefore, those having ordinary skill in the art should recognize that various changes and modifications can be made to the embodiments described herein without departing from the scope and spirit of the application. Also, for the sake of clarity and conciseness, depictions of well-known functions and structures are omitted in the following description.

Obviously, the described embodiments are partial embodiments of the present disclosure, not all embodiments. Based on embodiments in the present disclosure, all other embodiments obtained by those having ordinary skill in the art without making inventive efforts all fall within the protection scope of the present disclosure.

It should be noted that the terminals involved in the embodiments of the present disclosure include but are not limited to a mobile phone, a Personal Digital Assistant (PDA), a wireless handheld device, a tablet computer, a Personal Computer (PC), an MP3 player, an MP4 player, a wearable device (e.g., intelligent spectacles, a smart watch, or a smart bracelet), and intelligent devices such as smart home devices.

In addition, the term "and/or" used in the text is only an association relationship depicting associated objects and represents that three relations might exist, for example, A and/or B may represents three cases, namely, A exists individually, both A and B coexist, and B exists individually. In addition, the symbol "/" in the text generally indicates associated objects before and after the symbol are in an "or" relationship.

In the training learning of the language model in the prior art, the training of the language model in respect of single-sentence classification tasks is lacked so that the language model lacks a single-sentence classification capability, thereby limiting the recognition effect of the language model for the text content.

In view of the above problems, the present disclosure provides a method for training language model, and associated apparatus, electronic device and readable storage medium, to implement the classification of a whole paragraph of text content by the language model and enhance an effect of recognizing the text content by the language model.

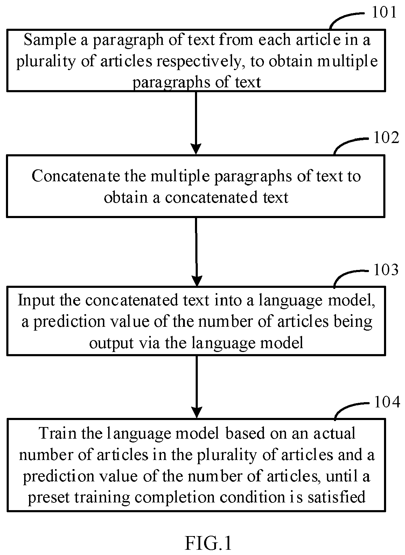

FIG. 1 illustrates a schematic diagram of a first embodiment of the present disclosure.
101: sampling a paragraph of text from each article in a plurality of articles respectively, to obtain multiple paragraphs of text.
102: concatenating the multiple paragraphs of text to obtain a concatenated text.
103: inputting the concatenated text into a language model, a prediction value of the number of articles being output via the language model.
104: training the language model based on the actual number of articles of the plurality of articles and the prediction value of the number of articles, until a preset training completion condition is satisfied.

The above 101-104 may be a process for iterative execution. The training of the language model is implemented is implemented by iteratively executing 101-104. The training of the language model is completed when the preset training completion condition is satisfied.

Optionally, in a possible implementation of the present embodiment, the preset training completion condition may be set according to actual needs, for example, may include: a difference between the actual number of articles of the plurality of articles and the prediction value of the number of articles is smaller than a first preset threshold, for example 2; and/or times of the training of the language model (namely, times of iterative execution of 101-104) reach a second preset threshold, for example, 1 million times.

It should be noted that subjects for executing 101-104 may partially or totally be an application located in a local terminal, or a function unit such as a plug-in or Software Development Kit (SDK) in the application located in the local terminal, or a processing engine located in a network-side server. This is not particularly limited in the present embodiment.

It may be understood that the application may be a native application (nativeAPP) installed on the terminal, or a web program (webApp) of a browser on the terminal. This is not particularly limited in the present embodiment.

In the present embodiment, the multiple paragraphs of text sampled from each article in the plurality of articles are concatenated, the language model is used to predict the number of articles (namely, the number of article sources) of the concatenated texts, the language model is trained based on the number of articles predicted by the language model and the actual number of articles such that the duly trained language model has a capability of recognizing and classifying the content of the whole paragraph of text, thereby enhancing the effect of recognizing the text content by the language model.

In addition, according to the technical solution provided by the present disclosure, when the duly trained language model is used for a subsequent NLP task, the accuracy of the processing result of the NLP task may be effectively improved.

Optionally, in a possible implementation of the present embodiment, at 101, a plurality of articles may be selected randomly from the article database, and then a paragraph of continuous text may be randomly sampled from each article in the plurality of articles, wherein each paragraph of continuous text includes at least one sentence, i.e., the paragraph of text selected from each article may include one sentence or a plurality of continuous sentences, e.g., may include two or three continuous sentences.

In the present embodiment, the article database may include a large number of articles which may be the same or different in terms of genre and content classification of articles. A plurality of articles are selected randomly from the article database each time, and one paragraph of continuous text is randomly sampled from each article in the plurality of articles to train the language model, so that the language model's capability of learning and classifying different content may be improved; since continuous text in one article is associated in coherence of content and semantics, sampling the continuous text from each article to train the language model facilitates improving the semantics learning capability of the language model to accurately recognize whether different sentences come from the same article.

Optionally, in a possible implementation of the present embodiment, the language model in the above embodiment of the present disclosure may be any language model, e.g., may employ an Enhanced Representation from kNowledge IntEgration (ERNIE) model.

The ERNIE model may learn a semantic representation of an entire concept by modeling priori semantic knowledge such as entity concepts in massive data. The ERNIE model is pre-trained with semantic units such as words and entity concepts so that the representations of the semantic knowledge units by the ERNIE model are closer to real world. The ERNIE model directly models the priori semantic knowledge units while modeling based on character feature input, and has a strong semantic representation capability. In the present embodiment, the ERNIE model is taken as the language model. The content of the whole paragraph of text may be recognized and classified by using the strong semantic representation capability of the ERNIE model, to further enhance the content-recognizing and classifying effect of the ERNIE model.

Optionally, in a possible implementation of the present embodiment, the number of characters of multiple paragraphs of text sampled from the plurality of articles is not greater than a preset number of characters. The preset number of characters may be set according to a maximum number of characters that may be supported by the language model, for example, the preset number of characters may be a maximum number of characters that may be supported by the language model; or, the preset number of characters may be the number of characters which is within a maximum number of characters that is supported by the language model and may have a better language recognition performance. A specific value of the number of characters may be determined according to the specific type and performance of the language model; or the preset number of characters may also be determined in other manners. The specific determination manner and value of the preset number of characters are not limited in the embodiment of the present disclosure.

For example, as for the ERNIE model, since it has a better semantic learning capability for a text having not more than 512 characters, the number of characters of the multiple paragraphs of text sampled from the plurality of articles may not be greater than 512. As such, when the ERNIE model is trained with the concatenated text having not more than 512 characters, the semantic learning capability of the ERNIE model may be sufficiently used, and the training efficiency and training effect of the ERNIE model may be improved.

Optionally, in a possible implementation of the present embodiment, at 102, the order of sentences in the multiple paragraphs of text may be shuffled, and the sentences whose order has been shuffled may be concatenated to obtain a concatenated text.

In the present embodiment, adjacent sentences in the concatenated text obtained by shuffling order of sentences in the multiple paragraphs of text and then concatenating them are not semantically associated. It is possible to, by using the resultant concatenated text to train the language model, improve the content-recognizing and classifying capability of the language model, and thereby improve the training effect of the language model.

Optionally, in a possible implementation of the present embodiment, sentence embeddings of the sentences in the multiple paragraphs of text may be set as a uniform preset embedding, for example, 0; or, the sentence embeddings of the sentences in the concatenated text may be set as a uniform preset embedding, for example, 0.

In the present embodiment, by setting the sentence embeddings of the sentences in the multiple paragraphs of text or in the concatenated text as a uniform preset embedding, the language model cannot perceive how many sentences are included in the input concatenated text, and is not prone to perceive how many articles the sentences in the concatenated text might come from, thereby improving the training effect of the language model.

Since the sentences are not distinguished in the concatenated text for training the language model in the embodiment of the present disclosure, the whole text of the concatenated text may be regarded as one sentence. The content recognition and classification for the concatenated text in the embodiment of the present disclosure may also be referred to as single-sentence classification. The language model obtained by training based on the present embodiment may be used for a single-sentence classification task.

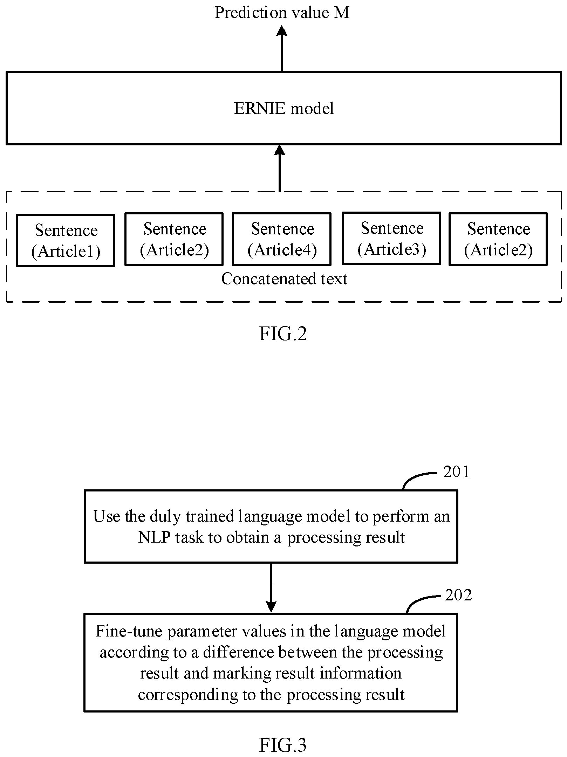

FIG. 2 illustrates a schematic diagram of a second embodiment of the present disclosure.

Four articles, namely, article 1, article 2, article 3 and article 4, are randomly selected from an article database, and one paragraph of continuous text is randomly sampled from each article of the four articles. Assuming that the text sampled from article 2 includes two continuous sentences, and one sentence is sampled from article 1, article 3 and article 4 respectively. The five sentences sampled from the four articles are concatenated after their order is shuffled, to obtain the concatenated text. The sentence embeddings of the five sentences are respectively set to 0, and then the concatenated text is input into the ERNIE model. The ERNIE model may be used to predict the number of articles of the concatenated text, namely, how many articles the concatenated text comes from, to obtain a prediction value M of the number of articles. The ERNIE model is trained based on the prediction value M of the number of articles and the actual number 4 of the articles, until the preset training completion condition is satisfied, for example, the prediction value M of the number of articles output by the ERNIE model is 4, or the times of training reach one million times.

FIG. 3 illustrates a schematic diagram of a third embodiment of the present disclosure.

On the basis of the first embodiment, after the duly trained language model is obtained upon satisfying the preset training completion condition, the language model may further be optimized through the supervised NLP task, to further improve the prediction performance of the language model in the NLP task.

In the second embodiment, optimization of the language model through the supervised NLP task may be specifically implemented through the following steps:
201: using the duly trained language model to perform an NLP task to obtain a processing result.

Optionally, in a possible implementation of the present embodiment, the NLP task for example may be any one or more of NLP tasks such as classification, matching and sequence marking, which will not be particularly limited in the present embodiment. Correspondingly, the processing result is a processing task of a specific NLP task, for example, a classification result, a matching result, a sequence marking result etc.

Optionally, in a possible implementation of the present embodiment, at 201, the NLP task is specifically performed with the duly trained language model in conjunction with other network models for implementing classification, matching and sequence marking, such as a Convolutional Neural Network (CNN), a Long Short Term Memory (LSTM) and a Bag of Word (BOW) model, to obtain a processing result. For example, other network models for implementing classification, matching and sequence marking perform processing such as classification, matching and sequence marking based on the output of the language model, to obtain the corresponding processing results such as a classification result, a matching result and a sequence marking result.

202: fine-tuning parameter values in the language model according to a difference between the processing result and marking result information corresponding to the processing result.

The marking result information is a correct processing result manually pre-marked with respect to the NLP task to be performed.

The above 201-202 may be a process for iterative execution. The language model is fine-tuned for multiple times by iteratively performing 201-202. The fine-tuning of the language model is completed when a preset condition is satisfied.

Optionally, in a possible implementation of the present embodiment, the preset condition may be set according to actual needs, for example, the preset condition may include: the difference between the processing result and the marking result information is smaller than a preset difference and smaller than a third preset threshold; and/or, the times of fine-tuning the language model (times of iteratively performing 201-202) reaches a fourth preset threshold.

In the present embodiment, it is possible to, without changing the overall structure of the language model, further optimize the parameter values in the language model through the NLP task with the supervised data (namely, the marking result information), thereby facilitating optimization and iteration of the language model according to the NLP tasks and improving the prediction performance of the language model.

As appreciated, for ease of description, the aforesaid method embodiments are all described as a combination of a series of actions, but those skilled in the art should appreciated that the present disclosure is not limited to the described order of actions because some steps may be performed in other orders or simultaneously according to the present disclosure. Secondly, those skilled in the art should appreciate the embodiments described in the description all belong to preferred embodiments, and the involved actions and modules are not necessarily requisite for the present disclosure.

In the above embodiments, embodiments are respectively described with different emphasis being placed, and reference may be made to related depictions in other embodiments for portions not detailed in a certain embodiment.

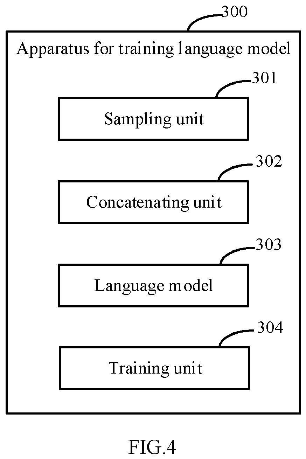

FIG. 4 illustrates a schematic diagram of a fourth embodiment of the present disclosure. As shown in FIG. 4, an apparatus 300 for training language model in the present embodiment may comprise a sampling unit 301, a concatenating unit 302, a language model 303 and a training unit 304. The sampling unit 301 is configured to sample a paragraph of text from each article in a plurality of articles respectively, to obtain multiple paragraphs of text; the concatenating unit 302 is configured to concatenate the multiple paragraphs of text to obtain a concatenated text; the language model 303 is configured to receive input concatenated text and output a prediction value of the number of articles; the training unit 304 is configured to train the language model 303 based on the actual number of articles of the plurality of articles and the prediction value of the number of articles, until a preset training completion condition is satisfied.

It should be noted that the subject for executing the apparatus for training language model according to the present embodiment may partially or totally be an application located in a local terminal, or a function unit such as a plug-in or Software Development Kit (SDK) in the application located in the local terminal, or a processing engine located in a network-side server. This is not particularly limited in the present embodiment.

It may be understood that the application may be a native application (nativeAPP) installed on the terminal, or a web program (webApp) of a browser on the terminal. This is not particularly limited in the present embodiment.

In the present embodiment, by sampling the multiple paragraphs of text sampled from each article in the plurality of article, the language model is trained based on the number of articles predicted by the language model and the actual number of articles so that that the duly trained language model has a capability of recognizing and classifying the content of the whole paragraph of text, thereby enhancing the effect of recognizing the text content by the language model.

In addition, according to the technical solution provided by the present disclosure, when the duly trained language model is used for a subsequent NLP task, the accuracy of the processing result of the NLP task may be effectively improved.

Optionally, in a possible implementation of the present embodiment, the sampling unit 301 is specifically configured to: randomly select the plurality of articles from the article database, and randomly sample a paragraph of continuous text from each article in the plurality of articles, wherein the paragraph of continuous text includes at least one sentence.

Optionally, in a possible implementation of the present embodiment, the number of characters of multiple paragraphs of text is not greater than a preset number of characters. The preset number of characters may be set according to a maximum number of characters that may be supported by the language model, for example, the preset number of characters may be a maximum number of characters that may be supported by the language model; or, the preset number of characters may be the number of characters which is within a maximum number of characters that is supported by the language model and may have a better language recognition performance. A specific value of the number of characters may be determined according to the specific type and performance of the language model; or the preset number of characters may also be determined in other manners. The specific determination manner and value of the preset number of characters are not limited in the embodiment of the present disclosure.

Optionally, in a possible implementation of the present embodiment, the concatenating unit 302 is specifically configured to shuffle the order of sentences in the multiple paragraphs of text, and concatenate the sentences whose order has been shuffled to obtain a concatenated text.

Optionally, in a possible implementation of the present embodiment, the language model 303 may be any language model, e.g., may employ an ERNIE model.

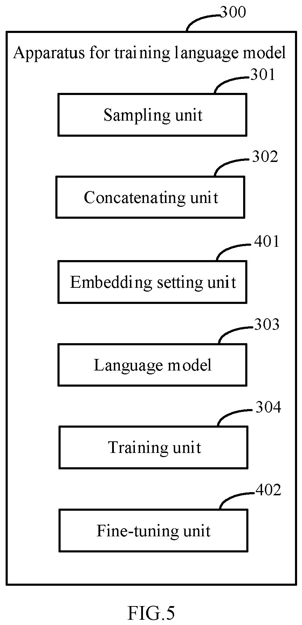

FIG. 5 illustrates a schematic diagram of a fifth embodiment of the present disclosure. As shown in FIG. 5, on the basis of the embodiment shown in FIG. 4, the apparatus 300 for training language model in the present embodiment may further include comprises: an embedding setting unit 401 configured to set sentence embeddings of the sentences in the multiple paragraphs of text as a uniform preset embedding; or, set the sentence embeddings of the sentences in the concatenated text as a uniform preset embedding.

Optionally, again referring to FIG. 5, in a possible implementation of the present embodiment, the language model 303 is further configured to perform an NLP task after a preset training completion condition is satisfied, to obtain a processing result. Correspondingly, the apparatus 300 for training language model in the above embodiment may further comprise: a fine-tuning unit 402 configured to fine-tune parameter values in the language model 303 according to a difference between the processing result and marking result information corresponding to the processing result.

It should be noted that the method in the embodiments corresponding to FIG. 1 through FIG. 3 may be implemented by the apparatus for training language model according to the embodiments shown in FIG. 4 through FIG. 5. Reference may be made to relevant content in the embodiments corresponding to FIG. 1 through FIG. 3 for detailed depictions. Details will not be presented any more here.

According to embodiments of the present disclosure, the present disclosure further provides an electronic device and a non-transitory computer-readable storage medium in which computer instructions are stored.

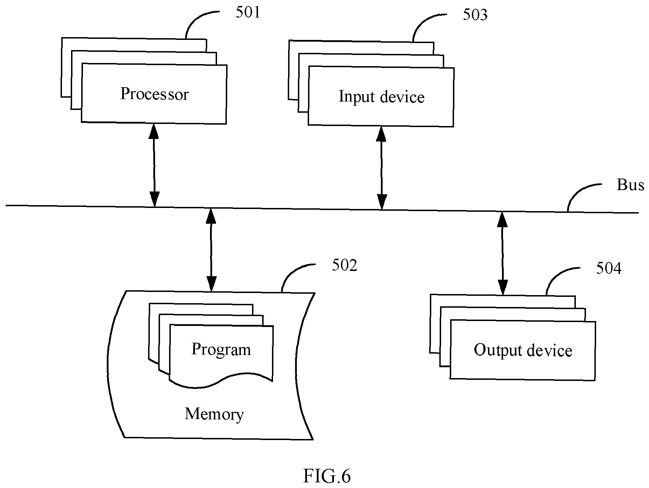

As shown in FIG. 6, it shows a block diagram of an electronic device for implementing the method for training language model according to embodiments of the present disclosure. The electronic device is intended to represent various forms of digital computers, such as laptops, desktops, workstations, personal digital assistants, servers, blade servers, mainframes, and other appropriate computers. The electronic device is further intended to represent various forms of mobile devices, such as personal digital assistants, cellular telephones, smartphones, wearable devices and other similar computing devices. The components shown here, their connections and relationships, and their functions, are meant to be exemplary only, and are not meant to limit implementations of the inventions described and/or claimed in the text here.

As shown in FIG. 6, the electronic device comprises: one or more processors 501, a memory 502, and interfaces configured to connect components and including a high-speed interface and a low speed interface. Each of the components are interconnected using various busses, and may be mounted on a common motherboard or in other manners as appropriate. The processor can process instructions for execution within the electronic device, including instructions stored in the memory or on the storage device to display graphical information for a GUI on an external input/output device, such as a display device coupled to the interface. In other implementations, multiple processors and/or multiple buses may be used, as appropriate, along with multiple memories and types of memory. Also, multiple electronic devices may be connected, with each device providing portions of the necessary operations (e.g., as a server bank, a group of blade servers, or a multi-processor system). One processor 501 is taken as an example in FIG. 6.

The memory 502 is a non-transitory computer-readable storage medium provided by the present disclosure. The memory stores instructions executable by at least one processor, so that the at least one processor executes the method for training language model according to the present disclosure. The non-transitory computer-readable storage medium of the present disclosure stores computer instructions, which are used to cause a computer to execute the method for training language model according to the present disclosure.

The memory 502 is a non-transitory computer-readable storage medium and can be used to store non-transitory software programs, non-transitory computer executable programs and modules, such as program instructions/modules (e.g., the sampling unit 301, the concatenating unit 30, the language model 303 and the training unit 304 shown in FIG. 4) corresponding to the method for training language model according to embodiments of the present disclosure. The processor 501 executes various functional applications and data processing of the server, i.e., implements the method for training language model according to embodiments of the present disclosure, by running the non-transitory software programs, instructions and units stored in the memory 502.

The memory 502 may include a storage program region and a storage data region, wherein the storage program region may store an operating system and an application program needed by at least one function; the storage data region may store data created in the use of the electronic device for implementing the method for training language model according to embodiments of the present disclosure. In addition, the memory 502 may include a high-speed random access memory, and may also include a non-transitory memory, such as at least one magnetic disk storage device, a flash memory device, or other non-transitory solid-state storage device. In some embodiments, the memory 502 may optionally include a memory remotely arranged relative to the processor 501, and these remote memories may be connected to the electronic device for implementing the method for training language model according to embodiments of the present disclosure. Examples of the above network include, but are not limited to, the Internet, an intranet, a local area network, a mobile communication network, and combinations thereof.

The electronic device for implementing the method for training language model may further include an input device 503 and an output device 504. The processor 501, the memory 502, the input device 503 and the output device 504 may be connected through a bus or in other manners. In FIG. 6, the connection through the bus is taken as an example.

The input device 503 may receive inputted numeric or character information and generate key signal inputs related to user settings and function control of the electronic device for implementing the method for training language model according to embodiments of the present disclosure, and may be an input device such as a touch screen, keypad, mouse, trackpad, touchpad, pointing stick, one or more mouse buttons, trackball and joystick. The output device 604 may include a display device, an auxiliary lighting device (e.g., an LED), a haptic feedback device (for example, a vibration motor), etc. The display device may include but not limited to a Liquid Crystal Display (LCD), a Light Emitting Diode (LED) display, and a plasma display. In some embodiments, the display device may be a touch screen.

Various implementations of the systems and techniques described here may be realized in digital electronic circuitry, integrated circuitry, specially designed ASICs (Application Specific Integrated Circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to send data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the terms "machine-readable medium" and "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back end component (e.g., as a data server), or that includes a middleware component (e.g., an application server), or that includes a front end component (e.g., a client computer having a graphical user interface or a Web browser through which a user may interact with an implementation of the systems and techniques described here), or any combination of such back end, middleware, or front end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

According to technical solutions of the embodiments of the present disclosure, by sampling the multiple paragraphs of text sampled from each article in the plurality of article, the language model is trained based on the number of articles predicted by the language model and the actual number of articles so that that the duly trained language model has a capability of recognizing and classifying the content of the whole paragraph of text, thereby enhancing the effect of recognizing the text content by the language model.

In addition, according to the technical solution provided by the present disclosure, when the duly trained language model is used for a subsequent NLP task, the accuracy of the processing result of the NLP task may be effectively improved.

It should be understood that the various forms of processes shown above can be used to reorder, add, or delete steps. For example, the steps described in the present disclosure can be performed in parallel, sequentially, or in different orders as long as the desired results of the technical solutions disclosed in the present disclosure can be achieved, which is not limited herein.

The foregoing specific implementations do not constitute a limitation on the protection scope of the present disclosure. It should be understood by those skilled in the art that various modifications, combinations, sub-combinations and substitutions can be made according to design requirements and other factors. Any modification, equivalent replacement and improvement made within the spirit and principle of the present disclosure shall be included in the protection scope of the present disclosure.

## Claims

1. A method for training language model, comprising:
sampling (101) a paragraph of text from each article in a plurality of articles respectively, to obtain multiple paragraphs of text;
concatenating (102) the multiple paragraphs of text to obtain a concatenated text;
inputting (103) the concatenated text into a language model, a prediction value of the number of articles being output via the language model;
training (104) the language model based on an actual number of articles in the plurality of articles and a prediction value of the number of articles, until a preset training completion condition is satisfied.

2. The method according to claim 1, wherein the sampling a paragraph of text from each article in a plurality of articles respectively, to obtain multiple paragraphs of text comprises:
randomly selecting the plurality of articles from an article database;
randomly sampling a paragraph of continuous text from each article in the plurality of articles, the paragraph of continuous text including at least one sentence.

3. The method according to claim 1, wherein the number of characters of multiple paragraphs of text is not greater than a preset number of characters.

4. The method according to claim 1, wherein the concatenating the multiple paragraphs of text to obtain a concatenated text comprises:
shuffling the order of sentences in the multiple paragraphs of text, and concatenating the sentences whose order has been shuffled to obtain a concatenated text.

5. The method according to any one of claims 1-4, wherein the language model comprises an Enhanced Representation from kNowledge IntEgration ERNIE model; and/or,
the method further comprises:
setting sentence embeddings of the sentences in the multiple paragraphs of text as a uniform preset embedding; or,
setting the sentence embeddings of the sentences in the concatenated text as a uniform preset embedding.

6. The method according to any one of claims 1-4, wherein after the preset training completion condition is satisfied, the method further comprises:
performing a natural language processing NLP task with the language model, to obtain a processing result;
fine-tuning parameter values in the language model according to a difference between the processing result and marking result information corresponding to the processing result.

7. An apparatus (300) for training language model, comprising:
a sampling unit (301) configured to sample a paragraph of text from each article in a plurality of articles respectively, to obtain multiple paragraphs of text;
a concatenating unit (302) configured to concatenate the multiple paragraphs of text to obtain a concatenated text;
a language model (303) configured to receive input concatenated text and output a prediction value of the number of articles;
a training unit (304) configured to train the language model based on an actual number of articles in the plurality of articles and a prediction value of the number of articles, until a preset training completion condition is satisfied.

8. The apparatus (300) according to claim 7, wherein the sampling unit (301) is specifically configured to
randomly select the plurality of articles from an article database;
randomly sample a paragraph of continuous text from each article in the plurality of articles, the paragraph of continuous text including at least one sentence.

9. The apparatus (300) according to claim 7, wherein the number of characters of multiple paragraphs of text is not greater than a preset number of characters.

10. The apparatus (300) according to claim 7, wherein the concatenating unit (302) is specifically configured to
shuffle the order of sentences in the multiple paragraphs of text, and concatenate the sentences whose order has been shuffled to obtain a concatenated text.

11. The apparatus (300) according to any one of claims 7-10, wherein the language model (303) comprises an Enhanced Representation from kNowledge IntEgration ERNIE model; and/or,
the apparatus further comprises an embedding setting unit (401) configured to set sentence embeddings of the sentences in the multiple paragraphs of text as a uniform preset embedding; or,
set the sentence embeddings of the sentences in the concatenated text as a uniform preset embedding.

12. The apparatus (300) according to any one of claims 7-10, wherein the language model (303) is further configured to perform an NLP task after a preset training completion condition is satisfied, to obtain a processing result;
the apparatus further comprises:
a fine-tuning unit (401) configured to fine-tune parameter values in the language model according to a difference between the processing result and marking result information corresponding to the processing result.

13. An electronic device, comprising:
at least one processor; and
a memory communicatively connected with the at least one processor; wherein,
the memory stores instructions executable by the at least one processor, and the instructions are executed by the at least one processor to cause the at least one processor to implement the method according to any one of claims 1-6.

14. A non-transitory computer-readable storage medium storing computer instructions therein, wherein the computer instructions are used to cause the computer to implement the method according to any one of claims 1-6.

15. A computer program product comprising instructions which, when the program is executed by a computer, cause the computer to implement the method according to any one of claims 1-6.
